(19) **Europäisches Patentamt**
**European Patent Office**
**Office européen des brevets**

(11) **EP 1 359 788 B1**

(12) **FASCICULE DE BREVET EUROPEEN**

(45) Date de publication et mention
de la délivrance du brevet:
**15.09.2010 Bulletin 2010/37**

(51) Int Cl.:
*H04S 1/00* *(2006.01)*     *G01S 3/808* *(2006.01)*

(21) Numéro de dépôt: **03100537.4**

(22) Date de dépôt: **05.03.2003**

(54) **Dispositif audiophonique panoramique pour sonar passif**

Panoramische Audiovorrichtung für Passiv- Sonar

Panoramic audio device for passive sonar

(84) Etats contractants désignés:
**AT BE BG CH CY CZ DE DK EE ES FI FR GB GR HU IE IT LI LU MC NL PT RO SE SI SK TR**

(30) Priorité: **08.03.2002 FR 0202958**

(43) Date de publication de la demande:
**05.11.2003 Bulletin 2003/45**

(73) Titulaire: **Thales**
**92200 Neuilly-sur-Seine (FR)**

(72) Inventeur: **Alinat, Pierre**
**Thales Intellectual Property**
**94117 CX Arcueil (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**DE-A- 1 566 857     FR-A- 2 623 292**

• **RICHARDSON S: "Three-dimensional auditory display of passive sonar data" JOURNAL OF THE ACOUSTICAL SOCIETY OF AMERICA, vol. 105, no. 2, février 1999 (1999-02), page 1366 XP002221415**

**Description**

La présente invention se rapporte aux dispositifs audiophoniques panoramiques pour les sonars passifs qui sont utilisés dans le domaine de la reconnaissance d'un bruiteur sous-marin par des opérateurs sonaristes munis d'un casque audiophonique. Plus particulièrement, elle se rapporte aux dispositifs appelés voies audio dans le cas de la reconnaissance des bruits impulsifs.

Une voie audio est, dans un sonar, une voie pointée dans la direction d'un "contact" afin de pouvoir entendre le bruit émanant de ce contact. Cette solution est satisfaisante dans la mesure où, s'agissant de bruits stationnaires, l'opérateur peut valablement écouter tous les contacts intéressants les uns après les autres. Dans le cas de la veille panoramique sur bruits impulsifs, une solution simple consiste à permettre à l'opérateur d'entendre un bruit impulsif après l'avoir archivé (la décision d'archivage ayant été prise en fonction de critères d'azimut, de spectre, de durée, ...). Cette solution est à retenir dans le cas où l'opérateur effectue des analyses complémentaires. Mais dans cette solution l'audio n'intervient pas dans le tri des contacts. Il faut donc la compléter par un autre système audio permettant ce tri. Etant donné que les bruits impulsifs ne durent par définition que très peu de temps, il faut disposer d'un système audio panoramique capable de faire entendre les bruits provenant de tout l'horizon, et ce bien entendu sans perdre le bénéfice de la formation de voies. Cette nécessité est accrue en situation de combat, notamment dans le cas d'un sous-marin pour lequel il faut distinguer rapidement entre un avion passant au-dessus et une torpille arrivant sur lui.

Dans l'art antérieur, on ne connaît pas de dispositif audio répondant à ce besoin, c'est à dire une écoute panoramique en temps réel des sources sonores.

Selon l'invention, un dispositif audiophonique panoramique pour sonar passif destiné à étudier les bruits impulsifs, du type comprenant une chaîne de traitement audio des "contacts", est principalement **caractérisé en ce que** cette chaîne comporte :

- un dispositif de formation de voies dans la direction de chaque "contact"
- au moins un module d'isolation en fréquence et en temps de chaque signal de "contact" dans chaque voie;
- au moins deux modules de traitement droite-gauche de chaque signal ainsi isolé pour fournir à partir de filtrages selon les caractéristiques de l'oreille humaine deux signaux gauche et droite correspondant à chaque signal de "contact" isolé;
- un dispositif de sommation pour tous les signaux gauches;
- un dispositif de sommation pour tous les signaux droits; et
- un dispositif d'écoute biauriculaire recevant les signaux sommés sur un transducteur gauche et un transducteur droit.

Selon une autre caractéristique, le module d'isolation reçoit les limites spectrales et temporelles de l'impulsion depuis un module d'analyse du "contact" en fréquence et en temps.

Selon une autre caractéristique, le module d'analyse du "contact" met en oeuvre une analyse spectrale, et une analyse en temps par une description d'enveloppe.

Selon une autre caractéristique, le module d'isolation soustrait le bruit de fond de l'impulsion du "contact".

Selon une autre caractéristique, les fonctions de transfert en amplitude et en phase des modules de traitement gauche-droite sont obtenues à partir des caractéristiques de l'oreille humaine.

Selon une autre caractéristique, la direction de chaque contact fournie par le sonar est déterminée par l'azimut de la voie du sonar dans laquelle se trouve le contact.

Selon une autre caractéristique, la direction de chaque contact est complétée par le site de la voie du sonar dans laquelle se trouve le contact.

Le dispositif proposé consiste pour chaque détection d'un bruiteur impulsif (contact) à former une voie dans sa direction puis, selon l'invention, à créer 2 signaux $s_g$ (t) et $s_d$ (t) tels que l'opérateur, recevant $s_g$ par l'écouteur gauche et $s_d$ par l'écouteur droit, ait la même impression de direction entre lui-même et le bruiteur que dans l'eau par rapport au bâtiment, l'axe de l'opérateur représentant l'axe du bâtiment. Il pourra ainsi distinguer plusieurs bruits impulsifs détectés même s'ils se chevauchent temporellement.

D'autres particularités et avantages de l'invention apparaîtront clairement dans la description qui suit, en regard de la figure unique qui représente la chaîne de traitement d'un dispositif selon l'invention.

En se reportant à la figure, le dispositif reçoit les signaux de l'antenne passive 100 à partir desquels sont formées, de manière connue par retards, n voies pointées dans les n azimuts $\theta_i$ ($1 \leq i \leq n$) pour lesquels la chaîne de traitement sonar 101 a donné un contact. Pour cela, chaque module 111, ....11n de formation de voie reçoit la durée $\Delta t_i$ et l'azimut $\theta_i$ du contact et fournit les signaux $s_i(t)$,..., $s_n(t)$ sur une durée un peu plus longue que le contact.

Chaque signal $s_i$ (t) est ensuite traité pour isoler en fréquence (module 121) et en temps (module 122) l'impulsion de bruit proprement dite, après analyse dans un module 120. On obtient ainsi n signaux $s'_i$ (t). Chaque signal $s'_i$ (t) est ensuite traité à nouveau dans un module 130 par filtrage (modules 131 et 132) en fonction de l'azimut $\theta_i$, pour produire 2 signaux gauche et droite $s_g^I(t)$ et $s_d^I(t).$

En bout de chaîne, les n signaux $s_g^I(t)$ d'une

part, et les n signaux $s_d^i(t)$ d'autre part, sont sommés dans deux modules 141 et 142 pour fournir deux 2 signaux gauche et droite aux écouteurs du casque audio 150.

Les signaux en sortie des capteurs de l'antenne 100 sont convertis en échantillons numériques. De manière connue, la formation des voies 11i consiste à retarder les signaux des capteurs pour les mettre en phase par rapport à chaque azimut $\theta_i$ dans lesquels le sonar a détecté un contact. Le sonar 101 fournit aux modules 11i la valeur de $\theta_i$ et celle de $\Delta t_i$ correspondant à la durée des contacts, de manière à former les voies sur une durée qui encadre bien le contact.

Chaque signal de voie $s_i(t)$ est traité ensuite de manière à isoler en fréquence et en temps l'impulsion de bruit. Pour cela chaque signal $s_i(t)$ est analysé en fréquence dans le module 120 pour analyse spectrale sur toute la bande audible, et en temps par une description de l'enveloppe. En particulier on recherche la fréquence à laquelle le signal est maximum et les amplitudes qui dépassent un certain seuil par rapport au bruit de fond. On en déduit la fréquence minimum $f_m$ et la fréquence maximum $f_M$, ainsi que les instants $t_m$ et $t_M$ qui délimitent le signal utile. L'isolation proprement dite est obtenue par un filtrage passe-bande dans le module 121 à partir des données $f_m$ et $f_M$ et par un fenêtrage dans le module 122 à partir des données $t_m$ et $t_M$.

Selon l'invention, chaque signal $s'_i(t)$ obtenu après isolation est traité pour fournir 2 signaux droite et gauche destinés à être envoyés aux écouteurs d'un casque. Le traitement consiste à filtrer dans le module 130 le signal sur 2 filtres 131 et 132 dont les fonctions de transfert dépendent de l'azimut $\theta_i$, soit $A_d(f, \theta_i)$ et Ag (f, $\theta_i$). Pour un azimut $\theta$ donné, elles sont différentes sauf pour les directions 0° et 180° prises par rapport à l'axe perpendiculaire à l'axe passant par les 2 oreilles.

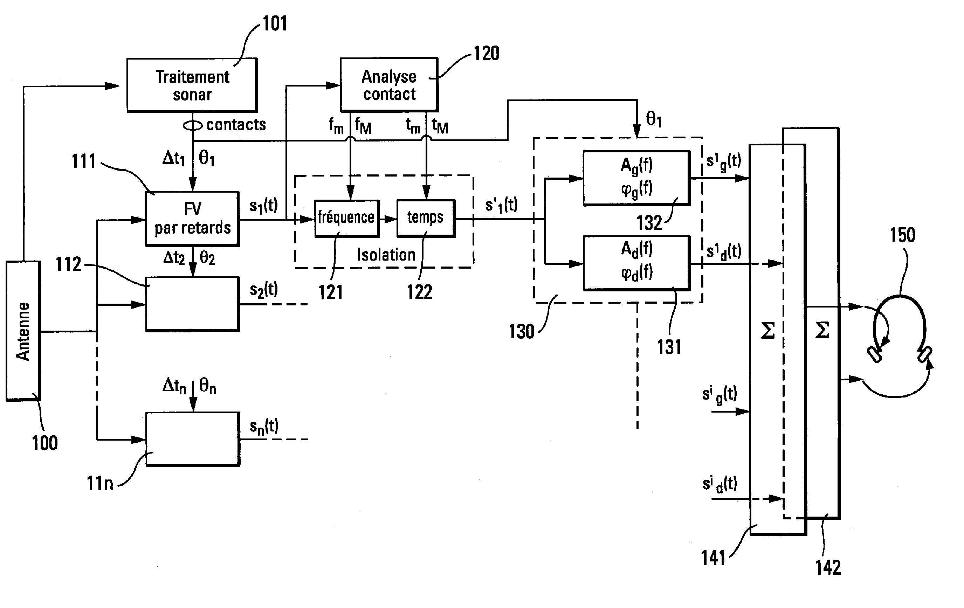

Ces fonctions de transfert $A_d$ et $A_g$ sont obtenues pour chaque $\theta_i$ à partir des connaissances que l'on a sur l'oreille humaine. Par exemple, ces fonctions, en amplitude et en phase, sont celles décrites dans un article du JASA Vo.61, N°6, Juin 1977, figure 11,12,14,15.

La réalisation des 2 filtres est faites sous forme de filtres numériques dont les coefficients sont tabulés en mémoire en fonction de l'azimut $\theta_i$.

L'ensemble des n signaux $s_g(t)$ et $s_d$ (t) ainsi obtenus sont additionnés séparément dans les modules 141 et142, et les 2 signaux de sortie sont envoyés sur les écouteurs du casque.

L'isolation des impulsions en fréquence et en temps permet d'éviter que l'attention de l'opérateur soit attirée par des informations ne faisant pas partie de l'impulsion, mais contenues dans le bruit de fond. Ainsi, à titre de variante, le dispositif prévoit d'éliminer le bruit de fond du signal écouté. Pour cela, on élargit la durée $\Delta t_i$ sélectionnée, de manière à pouvoir faire l'analyse spectrale d'une partie de signal située avant l'impulsion de bruit (par FFT), puis après avoir fait l'analyse spectrale de l'impulsion de bruit on soustrait raie par raie le bruit de l'impulsion et on revient au signal en temps par une FFT inverse.

Suivant une autre variante, le sonar fournit les directions en site des contacts et les fonctions de transfert sont déterminées en fonction de l'azimut et aussi de l'angle de site, comme décrit dans l'article cité précédemment, notamment aux figures 13 et 16. De cette manière, on obtient un système audio 3D.

Le dispositif selon l'invention peut aussi être utilisé pour connaître le bruit propre "impulsionnel" du porteur du sonar. Ce bruit est caractérisé par le fait qu'il provient généralement de plusieurs directions et le dispositif selon l'invention est dans ce cas capable de mesurer ces directions.

**Revendications**

1. Dispositif audiophonique panoramique pour sonar passif destiné à étudier les bruits impulsifs, du type comprenant une chaîne de traitement audio des "contacts", **caractérisé en ce que** cette chaîne comporte

   - un dispositif de formation de voies dans la direction de chaque "contact" (111-11n);
   - au moins un module d'isolation (120-122) en fréquence et en temps de chaque signal de "contact" dans chaque voie;
   - au moins deux modules de traitement droite-gauche (130-132) de chaque signal ainsi isolé pour fournir à partir de filtrages selon les caractéristiques de l'oreille humaine deux signaux gauche et droite correspondant à chaque signal de "contact" isolé;
   - un dispositif de sommation (141) pour tous les signaux gauches;
   - un dispositif de sommation (142) pour tous les signaux droits; et
   - un dispositif d'écoute biauriculaire (150) recevant les signaux sommés sur un transducteur gauche et un transducteur droit.

2. Dispositif selon la revendication 1, **caractérisé en ce que** le module d'isolation (121,122) reçoit les limites spectrales et temporelles de l'impulsion depuis un module d'analyse (120) du "contact" en fréquence et en temps.

3. Dispositif selon la revendication 2, **caractérisé en ce que** le module d'analyse du "contact" met en oeuvre une analyse spectrale, et une analyse en temps par une description d'enveloppe.

4. Dispositif selon l'une quelconque des revendications 2 et 3, **caractérisé en ce que** le module d'isolation soustrait le bruit de fond de l'impulsion du "contact".

**5.** Dispositif selon l'une quelconque des revendications 1 à 4, **caractérisé en ce que** les fonctions de transfert en amplitude et en phase des modules de traitement gauche-droite (130-132) sont obtenues à partir des caractéristiques de l'oreille humaine.

**6.** Dispositif selon l'une quelconque des revendications 1 à 5, **caractérisé en ce que** la direction de chaque contact fournie par le sonar est déterminée par l'azimut de la voie du sonar dans laquelle se trouve le contact.

**7.** Dispositif selon la revendication 6, **caractérisé en ce que** la direction de chaque contact est complétée par le site de la voie du sonar dans laquelle se trouve le contact.

**Claims**

**1.** A panoramic audiophonic device for a passive sonar designed to study impulsive noises, of the type which include an audio processing chain of the "contacts", **characterised in that** this chain includes:

- a device for forming channels in the direction of each "contact" (111-11n);
- at least one module for isolating (120-122) the frequency and timing of each "contact" signal in each channel;
- at least two left-right processing modules (130-132) for each signal thus isolated in order to provide, by means of filtering as a function of the characteristics of the human ear, two left and right signals corresponding to each isolated "contact" signal;
- an adding device (141) for all of the left signals;
- an adding device (142) for all of the right signals; and
- a binaural listening device (150) receiving the sum of the signals on a left transducer and a right transducer.

**2.** The device according to claim 1, **characterised in that** the isolation module (121, 122) receives the spectral and timing limits of the impulse from a frequency and timing analysis module (120) of the "contact".

**3.** The device according to claim 2, **characterised in that** the analysis module of the "contact" implements a spectral analysis and a timing analysis by an envelope description.

**4.** The device according to any one of claims 2 and 3, **characterised in that** the isolation module subtracts the background noise from the impulse of the "contact".

**5.** The device according to any one of claims 1 to 4, **characterised in that** the amplitude and phase transfer functions of the left-right processing modules (130-132) are obtained from the characteristics of the human ear.

**6.** The device according to any one of claims 1 to 5, **characterised in that** the direction of each contact provided by the sonar is determined by the azimuth of the sonar channel in which the contact is located.

**7.** The device according to claim 6, **characterised in that** the direction of each contact is completed by the location of the sonar channel in which the contact is located.

**Patentansprüche**

**1.** Panoramische Audiophonvorrichtung für ein Passiv-Sonar zum Studieren von impulsivem Rauschen des Typs, der eine "Kontakte"-Audioverarbeitungskette umfasst, **dadurch gekennzeichnet, dass** die Kette Folgendes beinhaltet:

- eine Vorrichtung zum Bilden von Kanälen in der Richtung jedes "Kontakts" (111-11n);
- wenigstens ein Modul (120-122) zum Trennen von Frequenz und Timing jedes "Kontakt"-Signals in jedem Kanal;
- wenigstens zwei Links-rechts-Verarbeitungsmodule (130-132) für jedes so getrennte Signal, um mittels Filterung auf der Basis der Charakteristiken des menschlichen Ohrs zwei linke und rechte Signale zu erzeugen, die jedem getrennten "Kontakt"-Signal entsprechen;
- eine Addiervorrichtung (141) für alle linken Signale;
- eine Addiervorrichtung (142) für alle rechten Signale; und
- eine binaurale Horchvorrichtung (150), die die addierten Signale auf einem linken Wandler und einem rechten Wandler empfängt.

**2.** Vorrichtung nach Anspruch 1, **dadurch gekennzeichnet, dass** das Trennmodul (121, 122) die spektralen und zeitlichen Grenzen des Impulses von einem Modul (120) zur Frequenz- und Timinganalyse des "Kontakts" erhält.

**3.** Vorrichtung nach Anspruch 2, **dadurch gekennzeichnet, dass** das Modul zum Analysieren des "Kontakts" eine Spektralanalyse und eine Timinganalyse durch eine Hüllkurvenbeschreibung implementiert.

**4.** Vorrichtung nach einem der Ansprüche 2 und 3, **dadurch gekennzeichnet, dass** das Trennmodul das Hintergrundrauschen von dem Impuls des "Kontakts" subtrahiert.

**5.** Vorrichtung nach einem der Ansprüche 1 bis 4, **dadurch gekennzeichnet, dass** die Amplituden- und Phasentransferfunktionen der Links-rechts-Verarbeitungsmodule (130-132) auf der Basis der Charakteristiken des menschlichen Ohrs erhalten werden.

**6.** Vorrichtung nach einem der Ansprüche 1 bis 5, **dadurch gekennzeichnet, dass** jeder von dem Sonar bereitgestellte Kontakt anhand des Azimuths des Sonarkanals bestimmt wird, in dem sich der Kontakt befindet.

**7.** Vorrichtung nach Anspruch 6, **dadurch gekennzeichnet, dass** die Richtung jedes Kontakts durch den Ort des Sonarkanals vervollständigt wird, in dem sich der Kontakt befindet.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *JASA,* Juin 1977, vol. 61 (6